# EUROPÄISCHE PATENTANMELDUNG

(11) **EP 1 043 683 A1**
(43) Veröffentlichungstag der Anmeldung: **11.10.2000**
(21) Anmeldenummer: 99810290.9
(22) Anmeldetag: 09.04.1999
(51) Int. Cl.: G06K 17/00, G06K 5/00, B42D 15/00

(54) **Blattförmiger Gegenstand mit mehreren voneinander räumlich getrennten Kolonnenfeldern sowie Vorrichtung zum Lesen des Kolonnenfelderinhalts**

(71) Anmelder: Salzgeber, Helmut, 3073 Gümligen (CH)
(72) Erfinder: Salzgeber, Helmut, 3073 Gümligen (CH)
(74) Vertreter: Roshardt, Werner Alfred, Dipl.-Phys.

(57) **Zusammenfassung**

Ein blattförmiger Gegenstand (**1**) hat mehrere voneinander räumlich getrennte Kolonnenfelder (**3 - 6**), wobei jedes Kolonnenfeld (**3 - 6**) wenigstens eine in einer Linie angeordnete Kolonne (**K**) und jede Kolonne (**K**) mehrere miteinander fluchtende und zur handschriftlichen Markierung ausgebildete Kolonnenflächenelemente (**E**) hat. Einander benachbarte Kolonnenflächenelemente (**E**) unterschiedlicher Kolonnen (**K**) tragen eine jeweils gleiche optische Darstellung und jedes Kolonnenfeld (**K**) definiert jeweils eine selbsttätig lesbare Anweisung. Mit dem blattförmigen Gegenstand soll eine Karte bzw. ein Schein geschaffen werden, auf dem auf einfache Art und Weise manuelle Anweisungen anbringbar sind und selbsttätig maschinell gelesen werden können; d.h. automatisch ausgewertet werden können, ohne daß handschriftliche Eigenheiten in die Lesbarkeit eingehen und diese erschweren könnten. Der Gegenstand kann als Zahlungsauftragskarte, Beilagenkarte, Bestellkarte, ... dienen.

## Beschreibung

Die Erfindung betrifft einen blattförmigen Gegenstand gemäß dem Oberbegriff des Patentanspruchs 1, eine Vorrichtung zum Lesen von Kolonnenfelderinhalten auf dem Gegenstand gemäß dem Oberbegriff des Patentanspruchs 7 sowie eine bevorzugte Verwendung gemäß dem Oberbegriff des Patentanspruchs 9.

### Stand der Technik

Blattförmige Gegenstände mit mehreren voneinander räumlich getrennten Kolonnenfeldern, wobei jedes Kolonnenfeld wenigstens eine in einer Linie angeordnete Kolonne und jede Kolonne mehrere miteinander fluchtende und zur handschriftlichen Markierung ausgebildete Kolonnenflächenelemente hat, waren als sogenannte Lottoscheine bekannt. Je nach Lottogesellschaft handelte es sich hier um von 1 bis 49 bzw. von 1 bis 45 durchnumerierte Kolonnenflächenelemente. Beim schweizerischen Zahlenlotto z.B. waren in einem Kolonnenfeld sieben Zeilen vorhanden, welche jeweils sechs nebeneinander angeordnete, miteinander fluchtende Kolonnenflächenelemente aufwiesen. Jeweils die ersten, zweiten, ... Flächenelemente pro Zeile waren fluchtend mit denjenigen der anderen Zeilen ober- und unterhalb angeordnet. Die Flächenelemente waren als quadratische Kästen ausgebildet. Jedes Kästchen eines Kolonnenfeldes hatte eine andere Zahl. Auf einem "Lottoschein" waren mehrere identische Kolonnenfelder nebeneinander angeordnet. Es waren zwei Reihen von Kolonnenfeldern vorhanden. Die angekreuzten sechs "Tippfelder" waren maschinell lesbar.

Ein weiterer, jedoch nicht gattungsgemäßer blattförmiger Gegenstand, eine sogenannte "Lochkarte" hatte von links nach rechts verlaufenden Zahlenreihe, wobei jede Reihe mehrere nebeneinander angeordnete miteinander fluchtende gleiche einstellige Zahlen aufwies. Von oben nach unten waren diese Zahlen, mit "0" beginnend und mit "9" endend, in Kolonnen angeordnet. In diese Zahlenreihen wurden Durchbrüche, welche Zahlen, Buchstaben und Zeichen kennzeichneten, eingestanzt. War in einer Kolonne ("0" bis "9") in der obersten Reihe die "0" ausgestanzt, so bedeutete diese die Zahl Null. War eine Ausstanzung am oberen Blattrand sowie eine zweite Ausstanzung in der "1"-Reihe vorhanden, so ergab dies den Buchstaben "A". Bei einer ersten Ausstanzung zwischen dem oberen Blattrand und dem Beginn des Zahlenfeldes sowie einer zweiten Ausstanzung in der "1"-Reihe ergab sich der Buchstabe "J". Bei einer ersten Ausstanzung in der "0"-Reihe sowie einer zweiten Ausstanzung in der "2"-Reihe ergab sich der Buchstabe "S". Bei einer ersten Ausstanzung am oberen Blattrand , einer zweiten Ausstanzung in der "8-Reihe" und einer dritten Ausstanzung in der "1-Reihe" ergab sich das Zeichen ",".

Auf dem blattförmigen Gegenstand (Lockkarte) konnten somit Zahlen durch eine einzige Ausstanzung pro Kolonne, Buchstaben durch zwei und Zeichen durch drei Ausstanzungen pro Kolonne dargestellt werden. Die mit Ausstanzungen versehenen Gegenstände (Lochkarten) wurden in den Anfängen der Computerzeit zur Computerprogrammerstellung verwendet. Die Durchbrüche und deren Zuordnung wurden automatisch mit elektro-optischen Sensoren ausgelesen oder mit mechanischen Greifern abgetastet.

### Aufgabe der Erfindung

Aufgabe der Erfindung ist es, ein Element zu schaffen, mit dem auf einfache Art und Weise manuelle Anweisungen anbringbar sind und selbsttätig dann gelesen werden können; d.h. automatisch ausgewertet werden können, ohne daß handschriftliche Eigenheiten in die Lesbarkeit eingehen und diese erschweren können.

### Lösung der Aufgabe

Die Aufgabe wird dadurch gelöst, daß ein blattförmiger Gegenstand im Gegensatz zur bekannten "Lochkarte" mehrere voneinander räumlich getrennte Kolonnenfelder aufweist. Es war bei der "Lochkarte" ja nur ein einziges Kolonnenfeld vorhanden. Mehrere voneinander getrennte Kolonnenfelder gab es nicht. Jede Lochkarte enthielt einen einzigen Programmbefehl.

Jedes der nebeneinander angeordneten Kolonnenfelder des erfindungsgemäßen blattförmigen Gegenstands hat wenigstens eine in einer Linie angeordnete Kolonne. Jede Kolonne hat mehrere miteinander fluchtende und zur handschriftlichen Markierung ausgebildete Kolonnenflächenelemente. Einander benachbarte Kolonnenflächenelemente unterschiedlicher Kolonnen tragen eine jeweils gleiche optische Darstellung. Jedes Kolonnenfeld definiert eine selbsttätig lesbare Anweisung, einen Datensatz. Das selbsttätige Lesen ist durch eine Leseeinheit möglich, welche dann die gelesenen Daten zur computerunterstützten Datenverarbeitung weiterleitet.

Die gelesenen Datensätze definieren u.a. Aufträge, wleche dann von der Vorrichtung selbst ausgeführt bzw. registriert oder an eine mit der Vorrichtung signalmäßig verbundene Einheit weitergeleitet werden. Bei den Aufträgen kann es sich um Zahlungsaufträge im Bankenwesen, um Bestellungen im Versandhandel etc. handeln. Es kann aber auch einer der Datensätze zu einer Personenidentifizierung verwendet werden und die restlichen Datensätze dann zur Registrierung bei Sportveranstaltungen, bei Kongressen, bei der Einwohnerkontrolle, zur Erstellung und Korrektur von Telefonbüchern, zur Unterlagenbestellung sowie zur Hotelreservation, zur Fahrkartenbestellung, zur Ferienbuchung usw. dienen.

Im Gegensatz zum "Lottoschein", auf dem lediglich eine Zahlenauswahl getroffen werden kann, ist beim erfindungsgemäßen Gegenstand nicht eine Zahlenauswahl, sondern eine Anweisung manuell markierbar, welche maschinell lesbar ist, ohne daß handschriftliche Unterschiede und Unzulänglichkeiten die Markierung dieser Anweisung beeinflussen können.

Weitere Vorteile der Erfindung sowie der Ausführungsvarianten ergeben sich aus dem untenstehenden Text.

### Kurze Beschreibung der Zeichnungen

Im folgenden werden Beispiele des erfindungsgemässen Gegenstands sowie der erfindungsgemäßen Vorrichtung zum Lesen des Gegenstands anhand der Zeichnungen näher erläutert. Es zeigen:
- Fig. 1: einen erfindungsgemäßen Gegenstand beispielsweise ausgebildet als Zahlungsauftragskarte,
- Fig. 2: eine beispielsweise Beilagenkarte zu der in **Figur 1** dargestellten Zahlungsauftragskarte,
- Fig. 3a: und 3b ein beispielsweises Schema zur Darstellung alphabetischer Zeichen und von Sonderzeichen,
- Fig. 4: eine Ausführungsvariante zu dem in **Figur 1** dargestellten Gegenstand als "Bestellkarte" zum Bestellen von acht unterschiedlichen Artikeln,
- Fig. 5: eine Variante zu dem in den **Figuren 1, 2** und **4** dargestellten blattförmigen Gegenstand und
- Fig. 6: eine schematische Darstellung einer Vorrichtung zum Lesen und Verarbeiten der in den **Figuren 1, 2, 4** und **5** dargestellten blattförmigen Gegenstände.

### Wege zur Ausführung der Erfindung

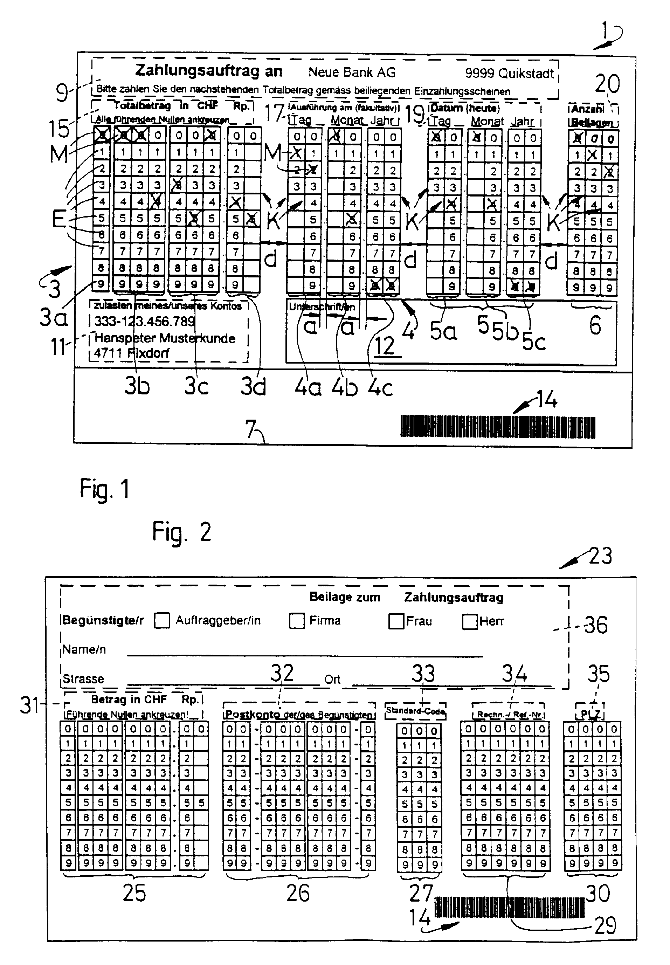

Die in **Figur 1** dargestellte Karte als blattförmiger Gegenstand, z.B. als Zahlungsauftragskarte **1**, hat mehrere voneinander räumlich getrennte Kolonnenfelder **3, 4, 5** und **6**. Die Kolonnenfelder **3, 4** und **5** sind in Teilkolonnenfelder **3a** bis **3d, 4a** bis **4c** und **5a** bis **5c** unterteilt. Jedes Kolonnenfeld bzw. -teilfeld **3a** bis **3d, 4a** bis **4c, 5a** bis **5c** und **6** hat wenigstens eine in einer Linie angeordnete Kolonne **K**. Das Kolonnenfeld **3a** hat nur eine Kolonne, die Kolonnenfelder **3b, 3c** und **6** haben drei und die Kolonnenfelder **3d, 4a** bis **4c** und **5a** bis **5c** haben entsprechend ihres unten beschriebenen Anweisungszweckes zwei Kolonnen **K**. Jede Kolonne **K** hat mehrere von oben nach unten miteinander fluchtende und zur handschriftlichen Markierung ausgebildete Kolonnenflächenelemente **E**. Einander benachbarte Kolonnenflächenelemente **E** unterschiedlicher Kolonnen **K** tragen eine jeweils gleiche optische Darstellung.

Der Abstand **a** zwischen den Teilkonnenfeldern **3a/b, 3b/c, 3c/d, 4a/b, 4b/c, 5a/b**, **5b/c** unterscheidet sich signifikant vom Abstand d zwischen den Kolonnenfeldern **3, 4, 5** und **6**, also zwischen dem Abstand **d** der Teilkolonnenfelder **3d/4a**, **4c/5a 5c/6**. Der Abstand a dient lediglich dazu, dem markierenden Benützer die Markierungsarbeit zu erleichtern. Der Abstand **a** wird beim unten beschriebenen maschinellen Auslesen ignoriert, der Abstand **d** wird jedoch maschinell gelesen und dient dazu, jeweils einen neuen Datensatz zu definieren.

Den Kolonnenflächenelementen **E** jeder Kolonnen **K** ist in der optischen Darstellung eine Kennzeichnung als Zahl in kontinuierlich aufsteigender Folge in Richtung zum unteren Blattrand **7** hin zugeordnet. Jede Kolonne **K** hat hier zehn Felder für die Zahlen von 0 bis 9. In dem hier gezeigten Beispiel sind es Zahlen, wobei alle "0", "1", "2", ... in einer Reihe nebeneinander fluchtend angeordnet sind. Die Kolonnenflächenelemente E haben gleich große Flächeninhalte und gleiche Konturen. Sie sind hier rechteckig, d.h. als Quadrate ausgebildet, in deren Mitte die jeweilige Zahl steht.

Die Zahlungsauftragskarte **1** hat mehrere Informationsfelder **9** und **11** in Klarschrift. Das Informationsfeld **9** dient zur allgemeinen Information. Es gibt den Zweck des blattförmigen Gegenstands an; hier beispielsweise eine Zahlungsauftragskarte 1 für eine bestimmte Bank (Neue Bank AG) an einem bestimmten Ort (9999 Quickstadt). In einem weiteren Informationsfeld **11** ist der Name des Kontoinhabers (Hanspeter Musterknabe, 4711 Fixdorf) und dessen Kontonummer (333-123.456.789) aufgedruckt. Ferner ist hier noch ein Unterschriftsfeld **12** für eine eventuell später vorzunehmende Legitimationsprüfung vorhanden. Oberhalb des unteren linken Blattrandes ist ferner ein Barcode **14** mit allgemeinen Informationen [z.B. Clearing-Nummer (Bankleitzahl), Konto-Nummer, Formularkennzeichnung, ...] für eine automatische Verarbeitung aufgedruckt.

Jedem der Kolonnenfelder **3a** bis **3d, 4a** bis **4c, 5a** bis **5c** und **6** ist ein Hinweisfeld **15, 17, 19** und **20** mit Anweisungen in Klarschrift zum Zweck der handschriftlichen Markierung zugeordnet. So zeigt beispielsweise das Hinweisfeld **15** an, daß die darunter stehenden Kolonnenfelder **3a** bis **3d** zum Eintragen eines Geldbetrags für den im Informationsfeld 9 angeführten Zahlungsauftrag dienen. Die Kennzeichnung des Geldbetrages erfolgt nun nicht mehr durch Eintragen eines Geldbetrages mit arabischen Zahlen, sondern lediglich durch eine handschriftliche Markierung **M**; hier durch Kreuze. Es ist in den Kolonnenfeldern **3a** bis **3d** ein Totalbetag von CHF 4'350 und 45 Rappen markiert. Um Unstimmigkeiten weitgehend auszuschließen, werden nicht benötigte Betragskolonnen jeweils durch ein Markieren der "0" aufgefüllt.

Durch die hier gezeigte Eingabe eines Geldbetrages lediglich durch eine Markierung **M** und nicht mehr durch eine Klarschrift unter Verwendung von handschriftlichen oder maschinengeschriebenen Buchstaben oder arabischen Zahlen, entfällt das Problem einer maschinellen Erkennung von unterschiedlichen oftmals schwer erkennbaren Zeichen. Bei einer unten erläuterten, maschinellen Verarbeitung muß nur noch erkannt werden, ob ein Flächenelement **E** markiert ist oder nicht. Die Markierung **M** kann nun wie hier gezeigt ein Kreuz sein. Es kann aber auch das betreffende Feld **E** angestrichen oder auch ganz ausgefüllt sein.

Analog wird dann mit einer Markierung der Kolonnenfelder **4a** bis **4c** mit dem Hinweisfeld **17**, welches sich hier auf einen Ausführungstag zur Durchführung des Zahlungsauftrages bezieht (hier der 12. Mai 1999), und mit den Kolonnenteilfeldern **5a** bis **5c**, welche sich auf das Ausstellungsdatum (Markierungsdatum) des Zahlungsauftrags beziehen (hier der 4. April 1999), vorgegangen. Auch hier gibt es keinen handschriftlichen Schreibeintrag mehr, welcher eventuell schwer entzifferbar wäre. Die Anzahl Beilagen, welche dem Zahlungsauftrag beigefügt sind, wird durch Markieren des Kolonnenfeldes **6** angegeben (hier z.B. zwölf Beilagen).

Neben der oben beschriebenen Zahlungsauftragskarte **1** können erfindungsgemäß eine Vielzahl von blattförmigen Gegenständen mit mehreren voneinander räumlich getrennten Kolonnenfeldern kreiert werden, bei denen jedes Kolonnenfeld wenigstens eine in einer Linie angeordnete Kolonne und jede Kolonne mehrere miteinander fluchtende und zur handschriftlichen Markierung **M** ausgebildete Kolonnenflächenelemente **E** hat, wobei einander benachbarte Kolonnenflächenelemente **E** unterschiedlicher Kolonnen **K** eine jeweils gleiche optische Darstellung tragen und jedes Kolonnenfeld **K** jeweils eine selbsttätig lesbare Anweisung definiert. Eine derartige weitere Ausführungsart zeigt **Figur 2** bei einer Beilagenkarte **23**. Diese Beilagenkarte **23** ist als Beilage zur bereits oben beschriebenen Zahlungsauftragskarte **1** gedacht. Sie weist die Kolonnenfelder **25** bis **27, 29** und **30** mit Hinweisfeldern **31** bis **35** für einen Geldbetrag, die Nummer eines Kontos des bzw. der Begünstigten, einem unten aufgeführten Standard-Code, einer Rechnungs- bzw. Referenz-Nummer und einer Postleitzahl des bzw. der Begünstigten auf. Ebenfalls hat sie lediglich zur Information für Kontrollzwecke und dem Kontoinhaber ein Informationsfeld **3**.

Das Bearbeiten und "Ausfüllen" der Beilagenkarte **23** erfolgt analog zur Zahlungsauftragskarte **1**. Diese Karte **23** hat jedoch zusätzlich das Kolonnenfeld **27**. In diesem Feld **27** kann nun ein vorgegebener bzw. gewünschter Verwendungszweck einer Zahlung markiert werden. So würde beispielsweise eine Markierung von "000" die Bezahlung eines Abonnements bedeuten. Weitere beispielsweise Markierungen könnten sein: "001" für Abzahlungsrate, "002" für Alimente, "003" für Anzahlung, ... Es könnten beispielsweise auch Jahreszahlen für Jahresbeiträge als "599" für das Jahr 1999 bzw. "500" für das Jahr 2000 angegeben werden. Skontoabzüge ließen sich als "301" für 1%, "302" für 1,5% usw. angeben. Es handelt sich hier nur um eine kleine Angabe von Möglichkeiten. Anstelle einer Dreierkolonne **27** können auch andere Anzahlen von Kolonnen verwendet werden. Pro Begünstigten d.h. pro Einzelzahlung ist immer eine Beilagenkarte **23** zu markieren. Werden beispielsweise fünf Zahlungsaufträge vorgenommen, sind fünf Karten **23** zu markieren.

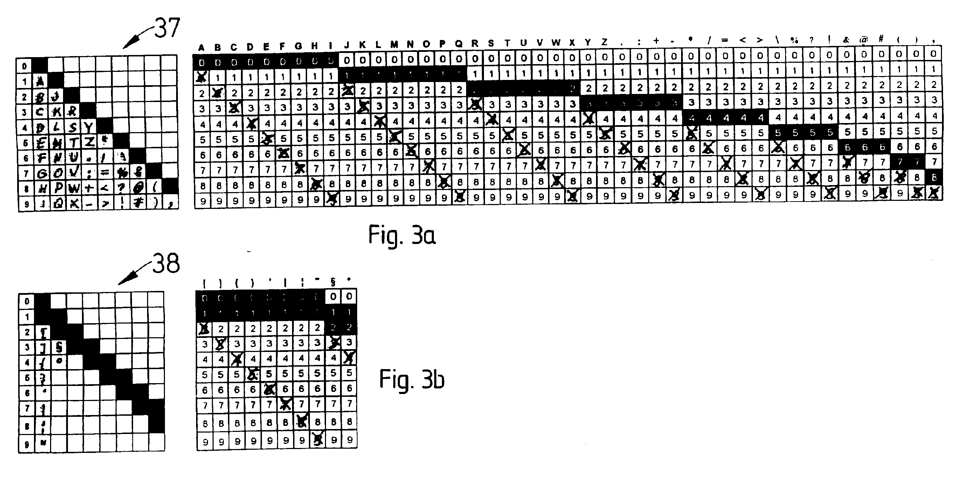

In den oben angeführten Ausführungsbeispielen war immer eine Definition der Anweisungen in den Kolonnenfeldern durch vorher definierte Zahlen bzw. Zahlenkombinationen vorgenommen worden. Sollten nun alphanumerische Zeichen und Sonderzeichen benötigt werden, so kann auch eine Darstellung in Kolonnenfeldern vorgenommen werden. Man würde nun pro Kolonne nicht mehr nur ein einziges Kolonnenflächenelement **E**, sondern zwei oder drei markieren. Ein beispielsweises Markierungsschema zeigen die **Figuren 3a** und **3b**. Um nun den Buchstaben "A" zu markieren, müßte die "0" und die in derselben Kolonne darunter liegende "1" markiert werden. Für "B" ebenfalls die "0" und die darunter liegende "2" usw. bis zum Buchstaben "I" ("0" + "9"). Für den Buchstaben "J" würde dann die "1" und die darunterliegende "2" markiert usw. Werden weitere darzustellende Zeichen gewünscht, so können, wie in **Figur 3b** dargestellt, entsprechend drei Felder **E** pro Kolonnen markiert werden. Zur vereinfachten Ausführung einer derartigen Darstellung alphabetischer Zeichen und Sonderzeichen kann nun einem Kolonnenfeld oder der ganzen Kolonnenfeldanordnung ein Buchstaben- und Sonderzeichenfeld **37** bzw. ein weiteres Sonderzeichenfeld **38** zugeordnet werden. Diese Zuordnung kann nun durch eine Anordnung links oder rechts neben der Kolonnenfeldanordnung erfolgen. Sie kann aber auch mit einem angehefteten oder losen bevorzugt transparenten Deckblatt, welches dann das Buchstaben- und Sonderzeichenfeld bzw. ein weiteres Sonderzeichenfeld trägt, erfolgen.

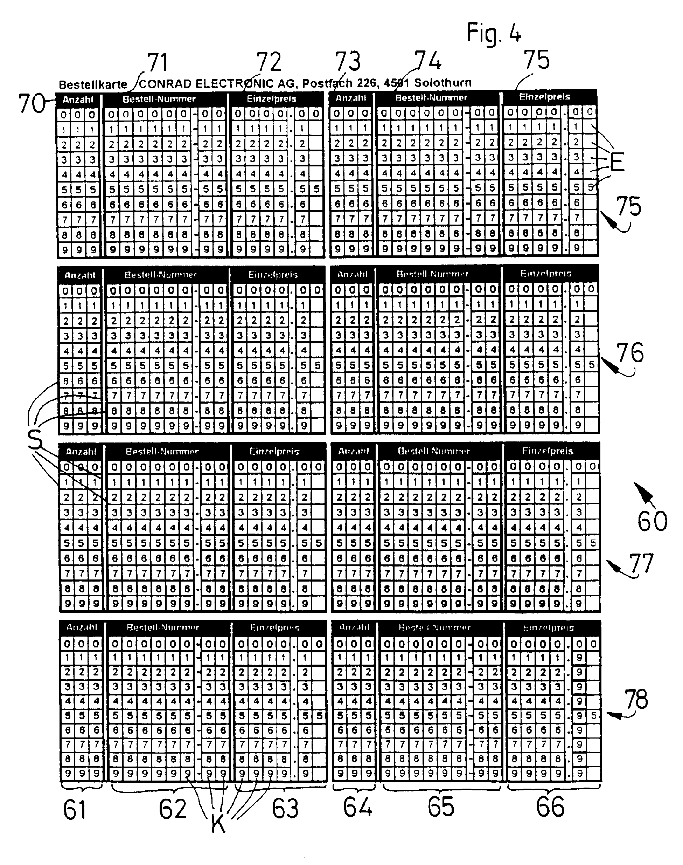

Eine weitere Ausführungsvariante eines blattförmigen Gegenstands zeigt **Figur 4** als Bestellkarte **60**. Die Bestellkarte **60** hat ebenfalls mehrere nebeneinander angeordnete Kolonnenfelder **61** bis **66**. Über jedem Kolonnenfeld **61** bis **66** ist ein Hinweisfeld **70** bis **74** angeordnet. Anfang und Ende jedes Kolonnenfeldes **61** bis **66** ist durch einen dick ausgezogenen Strich **S** gekennzeichnet. Dieser dicke Strich **S** ist dann von der unten erläuterten Leseeinheit **41** gut erkennbar. Die gelesenen Daten zwischen jeweils zwei Strichen **S** definieren dann einen Teildatensatz. Die Bestellkarte dient zum Bestellen von Artikeln bzw. Dienstleistungen . Jede Reihe **75** bis **78** von Kolonnenfeldern definiert immer zwei Artikel (bzw. Dienstleistungen). Mit der hier beispielsweise abgebildeten Bestellkarte **60** können acht Artikel (Dienstleistungen) bestellt werden.

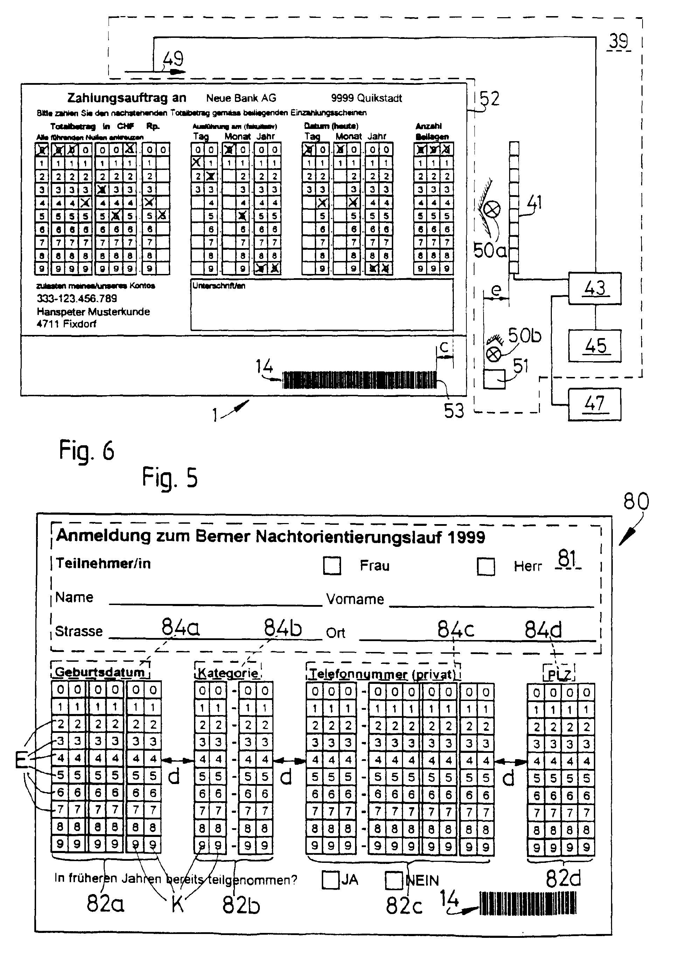

Eine Ausführungsvariante zu den in den **Figuren 1, 2** und **4** dargestellten blattförmigen Gegenständen ist in **Figur 5** gezeigt. Es handelt sich hier um einen Anmeldeschein **80** zu einer sportlichen Veranstaltung hier beispielsweise dem Berner Nachtorientierungslauf. Der Anmeldeschein **80** hat ein Informationsfeld **81** zum Eintragen der Adresse des Teilnehmers sowie vier Kolonnenfelder **82a-d**, welche mit dazu gehörenden Hinweisfeldern **84a-d** betreffend Geburtsdatum, Kategorie, Telefonnummer und Postleitzahl des Adreßortes gekennzeichnet sind. Die markierte Telefonnummer kann dann jeweils zur Verifizierung des angegebenen Namens mittels einer automatischen Abfrage in einem computer-mäßig abgespeicherten Telefonbuch erfolgen.

In dem hier gezeigten Beispiel wird der Name des Teilnehmers in Klarschrift in das Informationsfeld **81** eingetragen; er kann aber auch wie oben beschrieben unter Verwendung eines in den **Figuren 3a** und **3b** gezeigten Markierungsschemas in eine automatisch lesbare Kolonnenfeldmarkierung mit einem entsprechend ausgebildeten Anmeldeschein gebracht werden.

In einer abgeänderten Darstellung können dem Anmeldeschein nachempfundene Scheine bzw. Karten, wie bereits eingangs ausgeführt, zur Registrierung bei Kongressen, bei der Einwohnerkontrolle, zur Erstellung und Korrektur von Telefonbüchern, zur Unterlagenbestellung sowie zur Hotelreservation, zur Fahrkartenbestellung, zur Ferienbuchung usw. dienen.

Die in **Figur 6** lediglich schematisch angedeutete Vorrichtung **39** zum Lesen und Verarbeiten von handschriftlichen Markierungen **M** in mehreren voneinander räumlich getrennten Kolonnenfeldern **3** bis **6** eines blattförmigen Gegenstands, hier der oben beschriebenen Zahlungsauftragskarte **1** hat eine Leseeinheit **41** zum selbsttätigen Lesen der Markierungen **M** und eine Verarbeitungseinheit **43** mit einer Speichereinheit **45**, welche die gelesenen Daten (Markierungen) mit in der Speichereinheit **45** abgespeicherten zweiten Daten vergleicht und zur Datenverarbeitung an eine Prozessoreinheit **47** weiterleitet. Ferner hat die Vorrichtung in einer bevorzugten Ausführungsvariante einen Antrieb **49** zum Einziehen und Weiterziehen der Karten **1**, **23** bzw. **80** sowie einen Barcode-Leser **51** und Beleuchtungseinheiten **50a** und **50b** zur Beleuchtung des Barcode-Feldes **14** und der Kolonnenfelder im Bereich der jeweiligen Leseeinheiten. Wie bereits oben ausgeführt, werden zusammenhängende jeweils einen Teildatensatz definierende Zahlenkombinationen durch die Abstand **d** zwischen den einzelnen Kolonnen getrennt. Die kleinen Abstände **a** zwischen den Teilkolonnen, welche keine Bedeutung für den Teildatensatz haben, werden ignoriert. Mit der Vorrichtung **39** können hier die Karten **1**, **23** bzw. **80** verarbeitet werden. Die jeweiligen Teildatensätze ergeben dann den Datensatz auf der Karte **1**, **23** bzw. **80**.

Die Vorrichtung hat einen nicht dargestellten Schlitz, in den die Karten **1**, **23** bzw. **80** bevorzugt mit einer (nicht dargestellten) Vereinzelungseinrichtung zugeführt werden. Die Karten **1**, **23** bzw. **80** werden dann vom Antrieb **49** ergriffen und weiter gezogen. Der Barcode-Leser **51** erkennt die rechte Seite **52** der Karte **1**, **23** bzw. **80**. Der Barcode-Leser **51** ist um einen Abstand **e**, der größer ist als ein Abstand **c** zwischen dem Beginn **53** des Barcodes und dem Ende des Kolonnenfeldes **6** entgegen der Antriebsrichtung (Durchzugsrichtung der Karte **1** ) nach vorn versetzt. D.h. nach Erkennen der Seite **52** erscheint zuerst der Beginn des Barcodes und dann erst die Daten des Kolonnenfelde **6** (allerdings spiegelbildlich). Ist diese Reihenfolge nicht gegeben, so ist die Karte **1** um 180° verdreht eingelegt worden. Erscheinen keine Daten, handelt es sich um ein leeres Stück Papier oder Vorder- und Rückseite der Karte sind vertauscht. Die richtige Lage der Karte **1** ist hiermit erkennbar. Die gelesenen Daten können dann nach ihrer Invertierung über eine Bearbeitung mit der Verarbeitungseinheit **43** an die Prozessoreinheit **47** zum beispielsweisen Um- oder Abbuchen weitergegeben werden. Der Barcode enthält Daten, welche für die Kennzeichnung der Karte und deren nachfolgende Bearbeitung wichtig sind.

Auf eine Zeichenerkennung mit einer zeilenförmigen über den Kolonnenfeldern **3** bis **6** zuliegenkommenden Leseeinheit **41** kann in der Regel verzichtet werden, da markierte Felder M sich von nicht markierten durch deren Lichtreflexion unterscheiden.

Die hier dargestellten Karten sind nur einige von vielen Möglichkeiten. Weitere Ausführungen sind überall dort angezeigt, wo bisher handschriftliche Eintragungen verwendet worden sind, welche immer wieder zu einem Problem einer eindeutigen Lesbarkeit führten.

Anstelle des Barcodes können auch andere Kennzeichnungen auf einem blattförmigen Gegenstand zu dessen Lagekennzeichnung angebracht werden. Anstelle optisch lesbarer Kennzeichnungen können hierzu auch andere wie z.B. magnetische verwendet werden.

## Patentansprüche

1. Blattförmiger Gegenstand **(1; 23; 60; 80)** mit mehreren voneinander räumlich getrennten Kolonnenfeldern **(3 - 6; 25 - 27, 29, 30; 61 - 66; 82a - d)**, wobei jedes Kolonnenfeld **(3 - 6; 25 - 27, 29, 30; 61 - 66; 82a - d)** wenigstens eine in einer Linie angeordnete Kolonne **(K)** und jede Kolonne **(K)** mehrere miteinander fluchtende und zur handschriftlichen Markierung **(M)** ausgebildete Kolonnenflächenelemente **(E)** hat, dadurch gekennzeichnet, daß einander benachbarte Kolonnenflächenelemente **(E)** unterschiedlicher Kolonnen **(K)** eine jeweils gleiche optische Darstellung tragen und jedes Kolonnenfeld **(K)** jeweils eine selbsttätig lesbare Anweisung definiert.

2. Gegenstand **(1; 23; 60; 80)** nach Anspruch 1, **dadurch gekennzeichnet,** daß den die Kolonnenflächenelementen **(E)** jeder Kolonne **(K)** eine Zahlenkennzeichnung **(0 bis 9)** in kontinuierlich aufsteigender Folge zugeordnet ist, insbesondere die Flächenelemente **(E)** diese Zahlenkennzeichnung tragen, bevorzugt jede Kolonne **(K)** zehn Flächenelemente **(E)** hat und die Kolonnen **(K)** bevorzugt von oben nach unten verlaufend ausgebildet sind.

3. Gegenstand **(1; 23; 60; 80)** nach Anspruch 1 oder 2, **dadurch gekennzeichnet,** daß die Kolonnenflächenelemente **(E)** gleich große Flächeninhalte und gleiche Konturen haben und bevorzugt rechteckig, insbesondere quadratisch ausgebildet sind.

4. Gegenstand **(1; 23; 60; 80)** nach einem der Ansprüche 1 bis 3, **dadurch gekennzeichnet,** daß jedem Kolonnenfeld **(3 - 6; 25 - 27, 29, 30; 61 - 66; 82a - d)** ein Hinweisfeld **(15, 17, 19, 20; 31 - 35; 70 - 74; 84a - d)** mit Anweisungen in Klarschrift zum Zweck der handschriftlichen Markierung **(M)** zugeordnet ist, insbesondere in jeder Kolonne wenigstens ein Feld zu markieren ist.

5. Gegenstand **(1; 23; 60; 80)** nach einem der Ansprüche 1 bis 4, **gekennzeichnet durch** ein wenigstens einem Kolonnenfeld zugeordnetes Buchstabenfeld **(37)**, wobei bevorzugt die Buchstaben in alphabetischer Reihenfolge in mehreren Kolonnen, jedoch in gleicher Anzahl Kolonnenflächenelementen wie jedes zugehörige Kolonnenfeld derart angeordnet sind, daß durch eine Markierung **(M)** jeweils zweier Kolonnenflächenelemente **(E)** in einer Kolonne **(K)** im Kolonnenfeld eine eindeutige Bestimmung eines Buchstabens des Alphabetes sich ergibt.

6. Gegenstand **(1; 23; 60; 80)** nach einem der Ansprüche 1 bis 5, **gekennzeichnet durch** wenigstens eine auf seiner Oberfläche aufgebrachte Kennzeichnung **(14)**, aus der maschinell erkennbar ist, ob der Gegenstand auf seiner Rück- oder Vorderseite oder verdreht aufliegt und bevorzugt ein Barcode-Aufdruck **(14)** in Längsrichtung der Kolonnenfelder vorhanden ist.

7. Vorrichtung **(39)** zum Lesen und Verarbeiten von handschriftlichen Markierungen **(M)** in mehreren voneinander räumlich getrennten Kolonnenfeldern **(3 - 6; 25, 26, 27, 29, 30; 61 - 66; 82a - d)** eines blattförmigen Gegenstands **(1; 23; 60; 80)** nach einem der Ansprüche 1 bis 6, **gekennzeichnet durch** eine Leseeinheit **(41)** zum selbsttätigen Lesen der Markierungen **(M)** und eine Verarbeitungseinheit **(43)** mit einer Speichereinheit **(45)**, welche die gelesenen Daten mit in der Speichereinheit **(45)** abgespeicherten zweiten Daten vergleicht und zur Datenverarbeitung an eine Prozessoreinheit **(47)** weiterleitet.

8. Vorrichtung **(39)** nach Anspruch 7, **dadurch gekennzeichnet,** daß die Leseeinheit eine erste Erkennungseinheit zum Erkennen jeder Kolonne **(K)** und eine zweite Erkennungseinheit zum Erkennen der einzelnen Kolonnenflächenelemente in einer Kolonne **(K)** hat sowie die Leseeinheit einen Barcode-Leser **(51)** aufweist.

9. Verwendung von blattförmigen Gegenständen **(1; 23; 60; 80)** gemäß der Patentansprüche **1** bis **6**, welche mit einer Vorrichtung **(39)** gemäß einem der Patentansprüche 7 bis 8 les- und verarbeitbar sind, **dadurch gekennzeichnet,** daß die blattförmigen Gegenstände **(1; 23; 60; 80)** mehrere voneinander räumlich getrennte Kolonnenfelder **(3 - 6; 25 - 27, 29, 30; 61 - 66; 82a - d)** mit wenigstens einer in einer Linie angeordneten Kolonne **(K)** haben und jede Kolonne **(K)** mehrere Kolonnenflächenelemente **(E)** hat, welche mit Elementen **(E)** benachbarter Kolonnen **(K)** fluchten, in jeder Kolonne **(K)** von einer Person mindestens ein Element **(E)** handschriftlich markiert ist und mit der Vorrichtung aus den markierten Kolonnenfeldern **(3 - 6; 25 - 27, 29, 30; 61 - 66; 82a - d)** wenigstens ein Datensatz für wenigstens einen auszuführenden Auftrag ermittelbar ist, welcher von der Vorrichtung **(39)** an eine ausführende Einheit **(47)** weiterleitbar ist.

10. Verwendung nach Anspruch 9, **dadurch gekennzeichnet**, daß erste Datensätze auf einem ersten blattförmigen Gegenstand (**1; 23; 60; 80**) und dazugehörende zweite Datensätze auf mindestens einem zweiten Gegenstand handschriftlich markiert sind, wobei bevorzugt bei wenigstens einem der ersten Datensätze aus den handschriftlichen Markierungen **(M)** eine Personenidentifikation, bevorzugt eine Identifizierung der die Markierung **(M)** ausgeführten Person, mit der Vorrichtung ermittelbar und aus den Datensätzen der restlichen Kolonnenfelder ein der ersten Datenkennzeichnung zuzuordnender Auftrag bestimmbar ist, welcher von der Vorrichtung an eine ausführende Einheit weiterleitbar ist.
